(19) Europäisches Patentamt
European Patent Office
Office européen des brevets

(11) **EP 2 963 526 A1**

(12) **EUROPEAN PATENT APPLICATION**
published in accordance with Art. 153(4) EPC

(43) Date of publication:
**06.01.2016 Bulletin 2016/01**

(51) Int Cl.:
***G06F 3/041*** (2006.01)    ***G06F 3/045*** (2006.01)

(21) Application number: **14756670.7**

(22) Date of filing: **28.01.2014**

(86) International application number:
**PCT/JP2014/000413**

(87) International publication number:
**WO 2014/132558 (04.09.2014 Gazette 2014/36)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **27.02.2013  JP 2013036683**

(71) Applicant: **NEC CORPORATION**
**Tokyo 108-8001 (JP)**

(72) Inventor: **HOURYU, Takeshi**
**Kawasaki-shi**
**Kanagawa 211-8666 (JP)**

(74) Representative: **Vossius & Partner**
**Patentanwälte Rechtsanwälte mbB**
**Siebertstrasse 3**
**81675 München (DE)**

(54) **INPUT DEVICE, DRIVE METHOD THEREFOR, AND ELECTRONIC APPARATUS**

(57) **[PROBLEM TO BE SOLVED]** An object is to provide an input device which is highly transparent and does not affect the visibility of a display device.

**[SOLUTION]** An input device (10) comprises first electrodes (15) arranged above a transparent substrate, second electrodes (16) arranged on the transparent substrate in a manner to intersect with the first electrodes, and insulators (17) arranged at each intersection of the first electrodes and the second electrodes and insulate the first electrodes and the second electrodes from each other, in which at least a portion of the first electrodes and a portion of the second electrodes are exposed to the outside. By the number of the layers being decreased, the input device is made thinner and the transparency is increased, whereby the visibility of the display device is less diminished.

FIG. 1

EP 2 963 526 A1

## Description

### TECHNICAL FIELD

The present invention relates to an input device, a driving method therefor, and an electronic apparatus. Specifically, the present invention relates to a touch type input device, a driving method therefor, and an electronic apparatus.

### BACKGROUND ART

In recent years, the use of a touch type input device, or in other words, the use of a transparent touch panel attached on the display surface of a display device has become mainstream for electronic devices such as smartphones and tablet-type information processing devices. Because objects such as icons on the display surface can be viewed through the touch panel, the user can perform an intuitive operation of "making contact with" or "touching" an object.

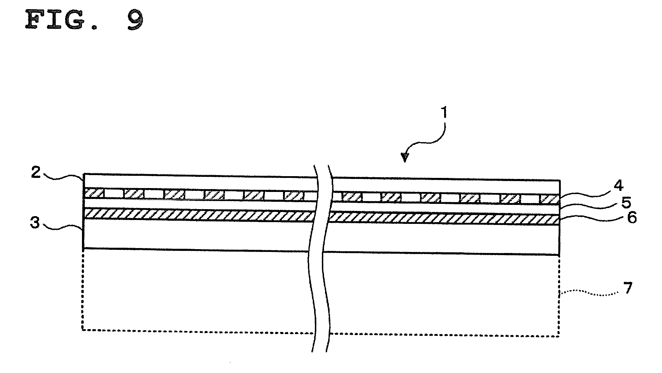

FIG. 9 is a sectional view of a touch panel. The touch panel 1 in FIG. 9 is a current mainstream projection-type capacitance touch panel. In brief, this touch panel 1 has a structure where upper transparent electrodes 4, a transparent insulating layer 5, and lower transparent electrodes 6 have been arranged between a transparent protection layer 2 and a transparent substrate 3 (refer to the following Patent Document 1). The upper transparent electrodes 4 and the lower transparent electrodes 6 are long electrodes having minute widths, and have been arranged in the longitudinal direction (column direction) and the lateral direction (row direction) of the display surface of a display device 7 , respectively, in a matrix at fine intervals. In the principle of operation of the touch panel 1, when a part of a human body (which is generally a finger) or an object such as a capacitance pen (hereinafter collectively referred to as "capacitance object") touches the touch panel 1, a minute high-frequency current flows between the upper transparent electrodes 4 and the lower transparent electrodes 6 at the touched point by the electrostatic capacitance of the capacitance object, whereby the touched point (intersection coordinates of the upper transparent electrodes 4 and the lower transparent electrodes 6) is detected.

### PRIOR ART DOCUMENT

### PATENT DOCUMENT

Patent Document 1: JP 3161738 (U)

### SUMMARY OF INVENTION

### Problem to be Solved by the Invention

However, the above-described touch panel 1 has a problem in that, since it has a five-layer structure including the transparent protection layer 2, the upper transparent electrodes 4, the transparent insulating layer 5, the lower transparent electrodes 6, and the transparent substrate 3, the thickness of the touch panel 1 is increased, whereby the transparency is decreased and the visibility of the display device 7 is adversely affected. This problem also applies to touch panels other than projection-type capacitance touch panels (such as resistance film touch panels). Although the numbers of their layers are slightly different, since they have a five-layer structure or a multi-layer structure similar thereto, the problem remains that the transparency is decreased and the visibility of the display device 7 is adversely affected thereby.

Accordingly, an object of the present invention is to provide an input device that is highly transparent and does not affect the visibility of a display device, a driving method therefor, and an electronic apparatus.

Means for Solving the Problem

An input device of the present invention is an input device comprising: first electrodes arranged above a transparent substrate; second electrodes arranged on the transparent substrate in a manner to intersect with the first electrodes; and insulators arranged at each intersection of the first electrodes and the second electrodes and insulate the first electrodes and the second electrodes from each other, wherein at least a portion of the first electrodes and a portion of the second electrodes are exposed to outside.

A driving method of the present invention is a driving method that is applied in the input device according to claim 1, comprising: a selecting step of sequentially selecting the first electrodes, and sequentially selecting the second electrodes while selecting one of the first electrodes; an applying step of applying a direct current voltage to a first electrode or a second electrode currently being selected in the selecting step; a detecting step of detecting a touch on an intersection point of the first electrodes and the second electrodes by a conductive material, based on a direct current voltage appeared in an electrode to which the direct current voltage is not applied among the first electrode and the second electrode; and a controlling step of controlling the applying step to change the direct current voltage that is applied to the first electrode or the second electrode in the applying step to a direct current voltage having a higher value, when the touch by the conductive material is detected in the detecting step.

### Effect of the Invention

According to the present invention, an input device that is highly transparent and does not affect the visibility of a display device, a driving method therefor, and an electronic apparatus can be provided.

## BRIEF DESCRIPTION OF DRAWINGS

FIG. 1 is a structural diagram of an input device according to an embodiment;

FIG. 2 is a block diagram of a touch panel 10;

FIG. 3 is a principle diagram of touch detection by the touch panel 10;

FIG. 4 is a block diagram of an electronic apparatus in which the input device (touch panel 10) of the embodiment has been applied;

FIG. 5 is a diagram showing an example of display by a display device 11;

FIG. 6 is a diagram showing an outline flowchart of a control program;

FIG. 7 is a structural diagram of an input device according to a second embodiment;

FIG. 8 is a diagram showing a modification of the second embodiment; and

FIG. 9 is a sectional view of a touch panel.

## DESCRIPTION OF EMBODIMENTS

Hereafter, embodiments of the present invention will be described with reference to the drawings.

<First Embodiment>

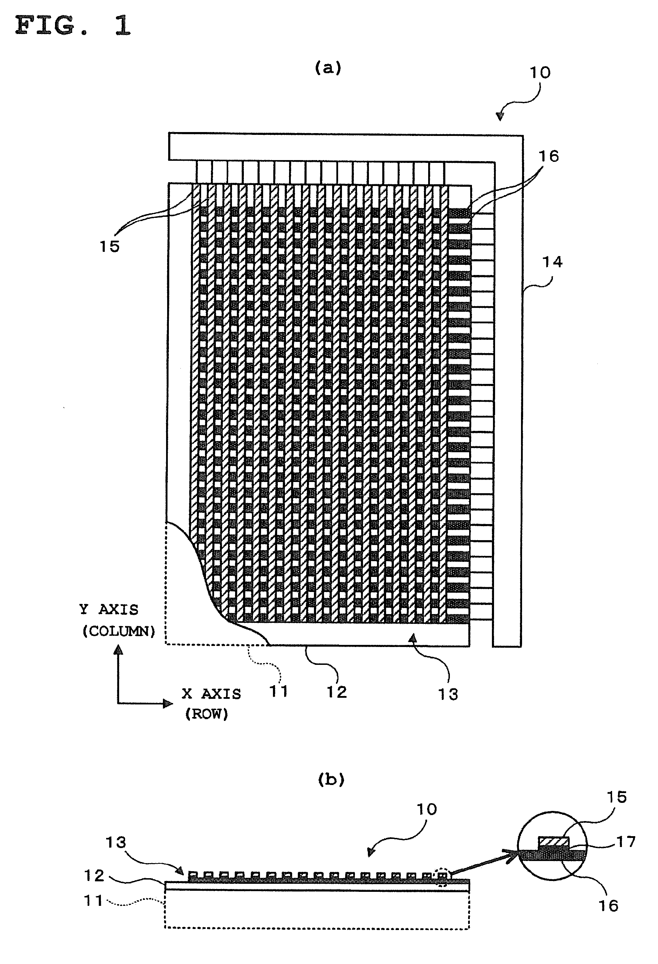

FIG. 1 is a structural diagram of an input device according to a first embodiment. A touch panel 10 serving as an input device in FIG. 1 is structured to include a thin plate-like transparent substrate 12 attached on the display surface of a display device 11 such as a liquid-crystal display panel, a transparent electrode layer 13 laminated on the transparent substrate 12, and a drive circuit 14.

The transparent electrode layer 13 includes a number of long transparent column electrodes 15 arranged at regular intervals in the lateral direction (row direction or X axial direction) of the display device 11 such that they are exposed to the outside, a number of long transparent row electrodes 16 arranged at regular intervals in the longitudinal direction (column direction or Y axial direction) such that they are exposed to the outside, and transparent insulators 17 provided at each intersection of the transparent column electrodes 15 and the transparent row electrodes 16 and electrically insulate them from each other. Note that "exposed to the outside" herein means that they are arranged to be exposed to the surrounding atmosphere (air), or more specifically, they are arranged such that they can be directly touched by a fingertip, an object, etc.

As such, the touch panel 10 of the first embodiment has a four-layer structure including the transparent substrate 12, the transparent column electrodes 15, the transparent row electrodes 16, and the transparent insulators 17. However, the transparent insulators 17 are partial layers positioned only at the intersections, and therefore can be counted out of the number of the layers. Accordingly, it can be concluded that the touch panel 10 of the first embodiment has a three-layer structure including the transparent substrate 12, the transparent column electrodes 15, and the transparent row electrodes 16.

Thus, the number of the layers of the touch panel 10 in the first embodiment is fewer than that of the touch panel 1 described in the beginning (refer to FIG. 9) (decreased from five layers to three layers). Even if the transparent insulators 17 are counted in the number of the layers, the number of the layers of the touch panel 10 is still fewer than that of the touch panel 1 (refer to FIG. 9) (decreased from five layers to four layers). As a result, the touch panel 10 has an advantage in that its thickness can be made thinner by the number of the decreased layers, whereby the transparency can be increased and an adverse effect to the visibility of the display device 11 can be reduced.

Regarding the material of each layer, the transparent substrate 12 may be any substrate as long as it is a transparent insulating substrate (which may be flexible). For example, a glass plate, an acrylic board, or the like may be used. Also, the transparent column electrodes 15 and the transparent row electrodes 16 may be any films as long as they are transparent conductive thin films. For example, transparent conducting films such as ITO (Indium Tin Oxide) may be used. Moreover, the transparent insulators 17 may be any film as long as it is a transparent insulating thin film. For example, a transparent insulating film containing an acrylic surfactant or the like may be used.

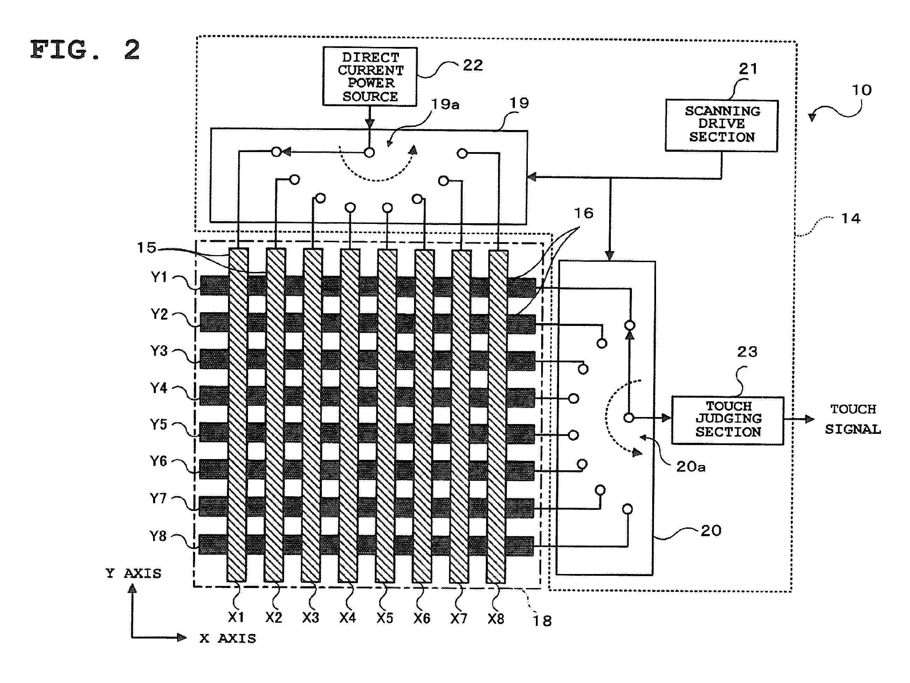

FIG. 2 is a block diagram of the touch panel 10. The plane shape of the touch panel 10 in FIG. 2 can be represented by a touch section 18 whose plane size (vertical and horizontal size) is almost the same as the display surface of the display device 11. Here, the longitudinal direction (vertical direction in the drawing) of the touch section 18 is Y axial direction, and the lateral direction (horizontal direction in the drawing) is X axial direction. In addition, the reference numerals X1 to X8 are given to the transparent column electrodes 15 arranged in the lateral direction, and the reference numerals Y1 to Y8 are given to the transparent row electrodes 16 arranged in the longitudinal direction.

Note that the number of the electrodes in FIG. 2 (eight electrodes in each of X and Y axial directions) is merely an example for explanation. The number of the electrodes is actually hundreds to thousands depending on the plane size of the touch section 18. Also, the entire touch section 18 including the electrodes Y1 to Y8 and X1 to X8 is translucent, and arbitrary display information displayed on the display surface of the display device 11 located on the rear side of the touch section 18 can be viewed through the touch section 18.

A X electrode selection section 19 of the drive circuit 14 is connected to one end side (upper end side in the drawing) of each electrode X1 to X8. Similarly, a Y electrode selection section 20 of the drive circuit 14 is connected to one end side (right end side in the drawing) of each electrode Y1 to Y8. These X electrode selection section 19 and Y electrode selection section 20 line-sequentially select the electrodes X1 to X8 and the electrodes Y1 to Y8 in response to scanning signals from a scanning drive section 21 of the drive circuit 14. The line sequential method may be performed in row (Y) units or column (X) units. For example, each column (X) may be selected in row (Y) units, or each row (Y) may be selected in column (X) units. Here, the latter method is adopted. Specifically, first, the X electrode selection section 19 and the Y electrode selection section 20 sequentially select the Y electrodes (Y1 to Y8) of the first row to the eighth row while selecting the X electrode (X1) of the first column, sequentially select the Y electrodes (Y1 to Y8) of the first row to the eighth row while selecting the X electrode (X2) of the second column, ..., and finally sequentially select the Y electrodes (Y1 to Y8) of the first row to the eighth row while selecting the X electrode (X8) of the eighth column, in response to scanning signals from the scanning drive section 21. By repeating this operation, the X electrode selection section 19 and the Y electrode selection section 20 line-sequentially select the electrodes X1 to X8 and the electrodes Y1 to Y8. Note that, although the sequential selection method has been described herein, the present invention is not limited thereto. For example, a thinning-like selection method where one or a plurality of electrodes is skipped may be used.

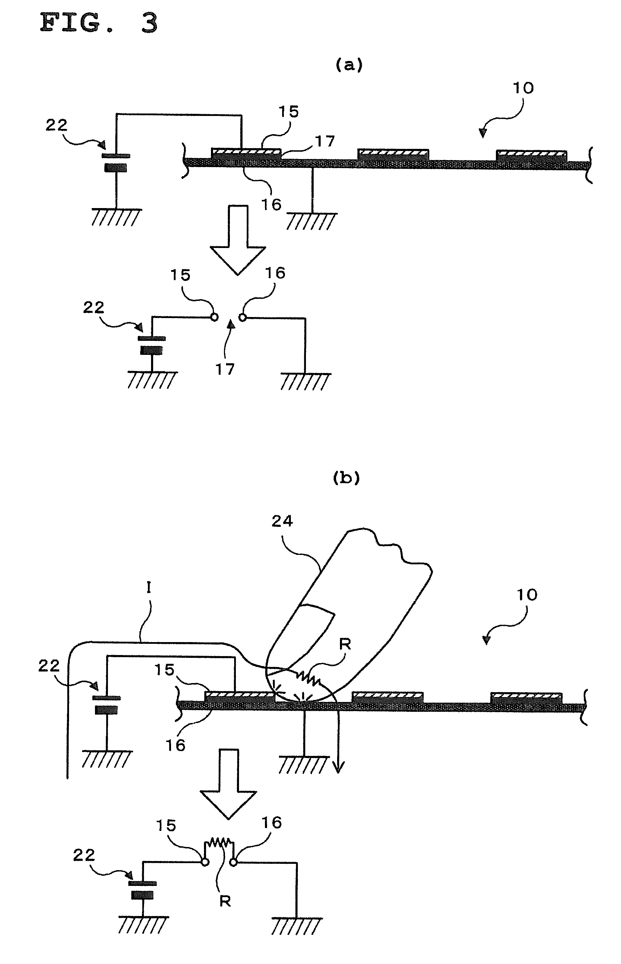

Rotary switches 19a and 20a having eight contact points described within the frames of the X electrode selection section 19 and the Y electrode selection section 20 indicate pattern diagrams of selection operations by the X electrode selection section 19 and the Y electrode selection section 20. The X electrode selection section 19 applies a direct current voltage outputted from a direct current power source 22 of the drive circuit 14 to a selected electrode (one of X1 to X1) via a contact point of the rotary switch 19a. Also, the Y electrode selection section 20 extracts a direct current voltage which has passed intersection resistance R (refer to FIG. 3) between a selected electrode (one of Y1 to Y1) and a X electrode currently being selected by the X electrode selection section 19, via a contact point of the rotary switch 20a, and outputs it to the touch judging section 23 of the drive circuit 14.

The touch judging section 23 removes an unnecessary signal component from a direct current voltage extracted via the Y electrode selection section 20, performs DC electrification, compares this direct current signal with a predetermined judgment threshold value to judge whether a touch operation on the touch section 9 has been performed, and outputs the judgment result as a touch signal.

FIG. 3 is a principle diagram of touch detection by the touch panel 10. First, in a normal state where an electric conductor 24 such as a part of a human body (for example, a fingertip) is not touching the touch panel 10, the transparent column electrodes 15 and the transparent row electrodes 16 have been insulated from each other by the transparent insulators 17 as shown in (a), and therefore a direct current voltage from the direct current power source 22 does not appear in the transparent row electrodes 16. On the other hand, when the electric conductor 24 touches the touch panel 10, the transparent column electrode 15 and the transparent row electrode 16 are electrically connected to each other via the intersection resistance R having a value equivalent to the electrical resistance (skin resistance in the case where the electric conductor 24 is a fingertip) of the electric conductor 24 as shown in (b), and therefore a direct current voltage (more specifically, a voltage lower than this direct current voltage) from the direct current power source 22 appears in the transparent row electrode 16.

That is, in the touched state, a closed circuit is formed where a direct current voltage is transferred to the transparent row electrode 16 from the direct current power source 22 via the transparent column electrode 15 and the intersection resistance R, and returned to the direct current power source 22 via ground. Given that an electric current that flows in this closed circuit is I, this I will be given by the following formula (1).

$$I = E/R \ \ldots \ (1)$$

E is the value of a direct current voltage outputted from the direct current power source 22 and R is the value of intersection resistance (a value equivalent to skin resistance in the case where the electric conductor 24 is a fingertip, which is about $1k\Omega$ to $5k\Omega$, although it is remarkably changed depending on dryness and moisture or the size of a contact area with respect to an electrode).

The electric current I in the normal state shown in (a) is O and the electric current I in the touched state shown in (b) is a value larger than O ($I = E/R : R = 1k\Omega$ to $5k\Omega$). Accordingly, whether or not a touch operation by the electric conductor 24 has been performed on the touch panel 10 can be detected by the electric current difference (difference between the electric current I in the normal state and the electric current I in the touched state).

Also, a touched point can be identified from scanned positions of the transparent column electrodes 15 and the transparent row electrodes 16 when a touch is detected. For example, in a case where scanned positions when a touch is detected indicate the electrode X4 and the electrode Y4 of FIG. 2, the coordinates (X4, Y4) are specified as the touched point.

Next, an example of the application of the touch panel 10 according to the first embodiment is described.

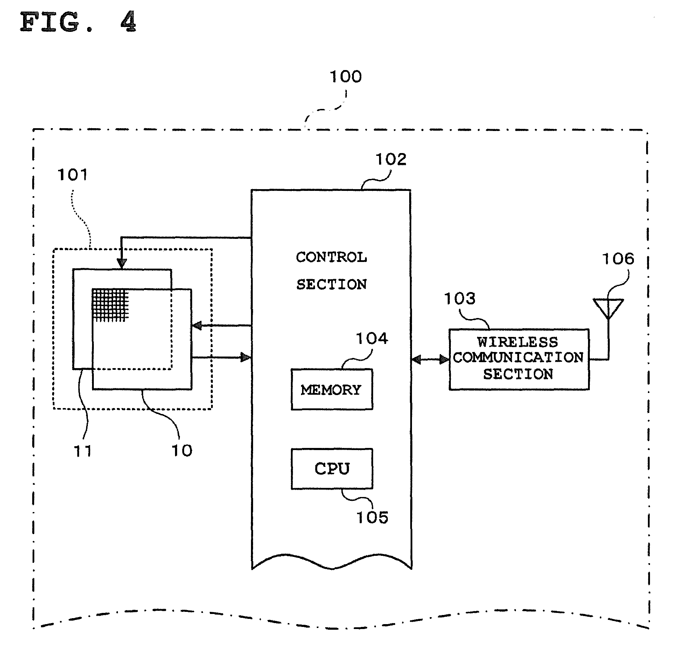

FIG. 4 is a block diagram of an electronic apparatus in which the input device (touch panel 10) of the first embodiment has been applied. Although not limited thereto, the electronic apparatus 100 in FIG. 4 is, for example, a mobile phone, and includes at least a display section 101, a control section 102, and a wireless communication section 103.

The display section 101 includes the touch panel 10 of the first embodiment, and a display device 11 having the touch panel 10 attached on the display surface thereof.

Note that, in FIG. 4, the touch panel 10 has been drawn at a position slightly shifted downward and rightward from the display device 11 for convenience of the drawing. However, in practice, they are overlapped with each other, and the user views display information on the display device 11 through the touch panel 10.

The display device 11 is a flat-surfaae type two-dimensional display device, such as a liquid crystal display panel, an organic liquid crystal display panel, an EL (electroluminescence) panel, and an electronic paper, and displays various information that are outputted from the control section 102 when necessary. The touch panel 10 drives the scanning drive section 21 of the drive circuit 14 under the control of the control section 102, and outputs a touch signal to the control section 102 in response to a touch on the panel surface by an electric conductor (for example, a part of a human body such as a fingertip).

The control section 102 is a program-controlled type control element, and actualizes various functions required for the electronic apparatus 100 by executing a control program stored in advance in a non-volatile and rewritable memory (such as a flash memory, a hard disk, or a silicon disc) 104 by a computer (hereinafter referred to as "CPU") 105.

The wireless communication section 103 herein is a wireless transmission and reception section for telephone calls. This wireless communication section 103 transmits and receives wireless signals of a frequency band dedicated to mobile phones via an antenna 106, and thereby performs wireless communication with a nearby wireless station (a wireless base station in a portable telephone network).

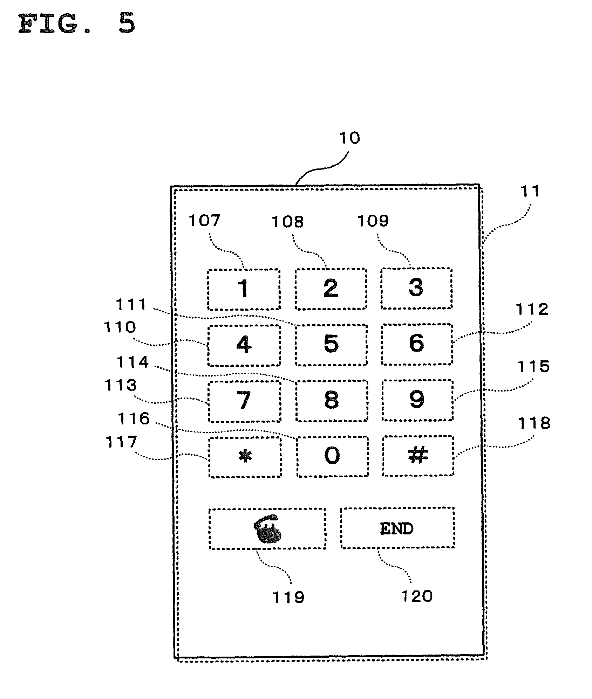

FIG. 5 is a diagram showing an example of display by the display device 11. In FIG. 5, a group of numeral keys for telephone calls has been displayed on the display surface of the display device 11. This numeral key group is constituted by icons such as numeral keys 107 to 116 of the numbers 0 to 9, a star key 117, a pound key 118, an on-hook key 119, and an off-hook key 120, which are objects drawn by software by the control program executed by the CPU 105 of the control section 102, and to each of which predetermined processing has been assigned by the control program.

The user can view these icons (display information on the display device 11) through the touch panel 10, as described above. Accordingly, when calling, for example, the number "090-111-1234", the user performs an intuitive operation of pressing (touching with a fingertip) the numeral keys 107 to 116 in the order of "0", "9", "0", "1", "1", "1", "1", "2", "3", and "4" and then pressing (touching) the on-hook key 119.

The touch panel 10 outputs to the control section 102 a touch signal responding to each touch on the numeral keys 107 to 116 of "0", "9", "0", "1", "1", "1", "1", "2", "3", and "4" and a touch signal responding to a touch on the on-hook key 119 at each touch timing.

The control section 102 loads each touch signal in order, identifies the touched point (coordinates) from the touch signal, and judges whether there is an object (in the case of the example in FIG. 5, one of the keys 107 to 120) at the touched point. When there is an object, the control section 102 performs predetermined processing assigned to this object. For example, when the object is a numeral icon, the control section 102 performs processing of emitting the corresponding number so as to generate the digit sequence of the telephone number to be called. When the object is the on-hook key, the control section 102 performs processing of calling the telephone number.

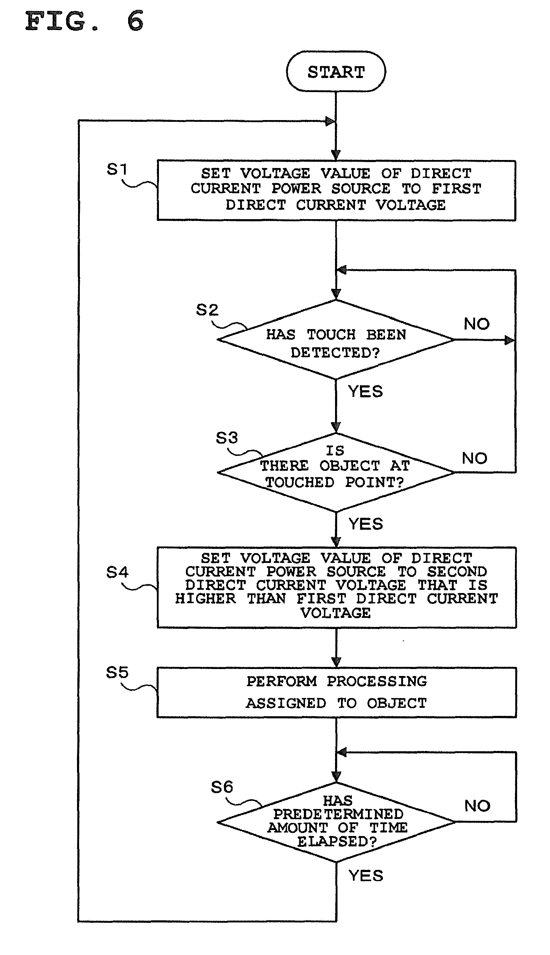

FIG. 6 is a diagram showing an outline flowchart of the control program. As shown in FIG. 6, the control section 102 first sets the voltage value of the direct current power source 22 to a first direct current voltage (Step S1). Subsequently, by monitoring for touch signals from the touch panel 10, the control section 102 judges whether a touch has been detected (Step S2).

Then, the control section 102 waits until a judgment result "YES" is obtained at Step S2. When a judgment result "YES" is obtained at Step S2, that is, when a touch on the touch panel 10 is detected, the control section 102 identifies the touched point (coordinates) on the touch panel 10 based on the order of the operations of the X electrode selection section 19 and the Y electrode selection section 20 at the touch detection timing, and judges whether there is an object (in the case of the example in FIG. 5, one of the keys 107 to 120) at the touched point (Step S3). When there is no object, the control section 102 returns to Step S2. When there is an object, the control section 102 sets the voltage value of the direct current power source 22 to a second direct current voltage that is higher than the above-described first direct current voltage (Step S4), and performs predetermined processing assigned to the object (Step S5). Then, the control section 102 waits until a predetermined amount of time elapses (Step S6), and again performs operations of Step S1 and the following steps repeatedly.

Here, in the control program shown in FIG. 6, the characteristic processing where "the control section 102 sets the voltage value of the direct current power source 22 to a second direct current voltage that is higher than the above-described first direct current voltage" is performed at Step S4. The purpose of this processing is to give a feedback feeling of a touch operation to the user. That is, since the objects drawn on the display surface of the display device 11 are merely images, an operational feeling that is acquired when a mechanical switch is pressed (also referred to as a click feeling, which is, in short, a feedback feeling to a user) is not obtained.

In order to give this operational feeling, for example, a vibration source such as a vibrator is driven. However, its vibration sound is annoying and frowned on by people around the user especially in a place where silence is required.

The control program in FIG. 6 is to overcome the drawback of this alternative feedback means and give a desired feedback feeling to the user. In the principle thereof, cutaneous current of a level perceptible to human bodies is applied when a touch is detected.

That is, the first direct current voltage of the two voltages to be set for the direct current power source 22 is used for touch detection, and the second direct current voltage is used to give a feedback feeling. Specifically, the first direct current voltage has a value by which a touch can be detected and a small amount of cutaneous current (referred to as "Ia" for convenience of explanation) that is imperceptible to human bodies can be applied, and the second direct current voltage has a value by which a relatively large amount of cutaneous current (referred to as "Ib" for convenience of explanation) that is perceptible to human bodies can be applied.

As a matter of course, the value of "a relatively large amount of cutaneous current Ib" should never be set to a level that is harmful to human bodies. Proper values of these two cutaneous currents Ia and Ib may be selected by a trial-and-error method through various experiments and the like. In short, proper values thereof can be acquired by the above-described conditions "the first direct current voltage has a value by which a touch can be detected and a small amount of cutaneous current Ia that is imperceptible to human bodies can be applied, and the second direct current voltage has a value by which a relatively large amount of cutaneous current Ib that is perceptible to human bodies can be applied" being satisfied after due consideration of safety.

"A predetermined amount of time" at Step S6 is a waiting time for giving a feedback interval, and a proper value thereof may be set by a trial-and-error method through various experiments and the like.

Thus, with the input device (touch panel 10) according to the first embodiment, the driving method therefor, and the electronic device (electronic device 100) where the input device (touch panel 10) has been applied, the following effects can be achieved.

(1) An input device (touch panel 10) having fewer layers can be provided. For example, the number of the layers can be decreased to four, which is one layer fewer than that of the above-described prior art having five layers (refer to FIG. 9). If the transparent insulators 17 are not counted in the number of the layers, the number of the layers is three, which is two layers fewer than that of the prior art. By having fewer layers , the input device (touch panel 10) can be made thinner by the number of the layers and the transparency can be increased. Accordingly, an effect is achieved in that the visibility of the display device 7 is less diminished.

(2) Since the display device 11 is not required to be reconfigured, the versatility of the display device 11 is not impaired and the cost thereof is not increased.

(3) Since cutaneous current of a level perceptible to human bodies is applied when a touch is detected, a feedback feeling upon a touch operation can be provided to the user. Well-known arts where a feedback feeling is provided by vibration are disadvantageous in that the vibration sound is annoying and frowned on by people around the user in a place where silence is required. However, the feedback means of the first embodiment (where a cutaneous current is used) does not have such a disadvantage.

<Second Embodiment>

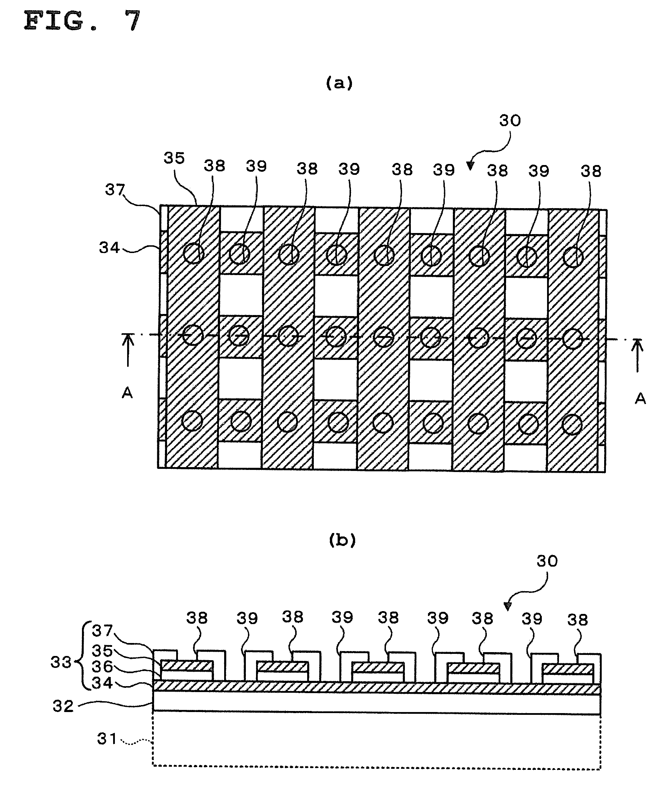

FIG. 7 is a structural diagram of an input device according to a second embodiment, in which (a) is a top view and (b) is a cross-sectional view taken along line A-A. A touch panel 30 serving as an input device in the drawing is structured to include a thin plate-like transparent substrate 32 attached on the display surface of a display device 31 such as a liquid-crystal display panel, and a transparent electrode layer 33 laminated on this transparent substrate 32.

The transparent electrode layer 33 includes a number of long transparent row electrodes 34 arranged at regular intervals in the longitudinal direction (column direction or Y axial direction) of the display device 31, a number of long transparent column electrodes 35 arranged at regular intervals in the lateral direction (row direction or X axial direction), transparent insulators 36 provided at each intersection of the transparent row electrodes 34 and the transparent column electrodes 35 and electrically insulate them from each other, a protection member 37 constituted by a transparent insulation material which covers the entire transparent electrode layer 33, and a number of pinholes 38 and 39 formed penetrating through the protect member 37 in the vertical direction.

This structure is preferable in that, because the transparent row electrodes 34 and the transparent column electrodes 35 are protected by the protection member 37, physical troubles (delamination and the like) between the transparent row electrodes 34 and the transparent column electrodes 35 do not occur.

Here, in the example of FIG. 7, the pinholes 38 and 39 have been formed to be positioned on each intersection of the transparent row electrodes 34 and the transparent column electrodes 35 and the transparent column electrodes 35 adjacent to the sides of each intersection. However, the formation positions are not limited thereto, and the following formation positions may be adopted.

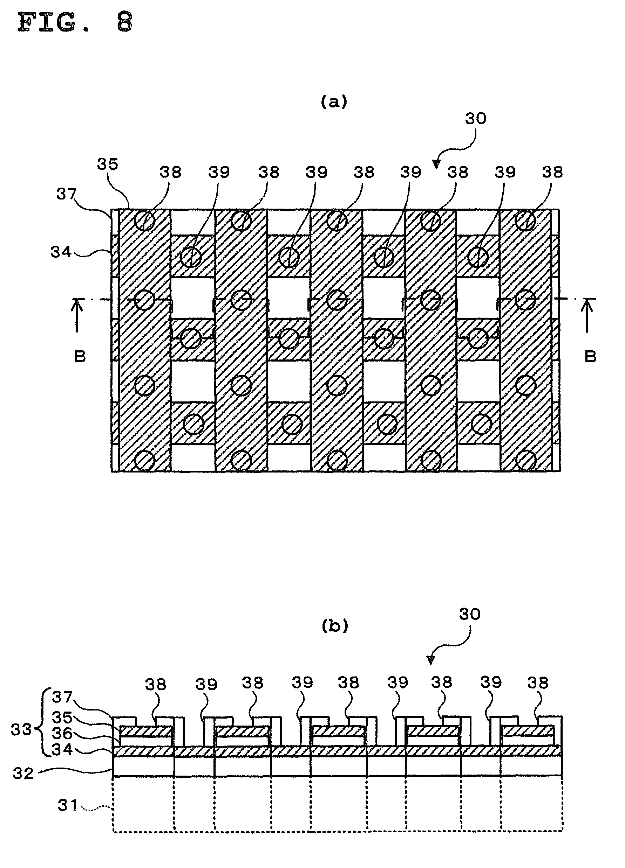

FIG. 8 is a diagram showing a modification of the second embodiment, in which (a) is a top view and (b) is a cross-sectional view taken along line B-B. FIG. 8 is different from FIG. 7 in that the pinholes 38 have been shifted from each intersection of the transparent row electrodes 34 and the transparent column electrodes 35. That is, in the example of FIG. 7, the pinholes 38 and 39 are arranged evenly in the longitudinal and lateral directions. However, in the example of FIG. 8, the pinholes 38 and 39 are arranged alternately. In this regard, they are different from each other.

This structure is also preferable in that the transparent row electrodes 34 and the transparent column electrodes 35 are protected by the protection member 37, whereby physical troubles (delamination and the like) between the transparent row electrodes 34 and the transparent column electrodes 35 do not occur.

Note that, although there have been formed the pinholes 38 and 39 in the above-described embodiment and the modification example, contacts formed on the transparent row electrodes 34 or the transparent column electrodes 35 may be used instead of these pinholes 38 and 39.

Also, the input devices (touch panel 10 or 30) of the embodiments are not necessarily required to be applied in a mobile phone, a smartphone, or the like as described above, and can be widely applied in electronic apparatuses that require a touch type input device, such as a tablet PC (Personal Computer), a notebook PC, a PDA (Personal Data Assistant: portable information terminal), a movie playback apparatus, a game machine, an electronic dictionary, a music apparatus, a digital still camera, a digital video camera, and an industrial equipment.

Moreover, although the transparent column electrodes 15 and the transparent row electrodes 16 (the transparent row electrodes 34 and the transparent column electrodes 35 in the case of the second embodiment) have a "long shape" in the embodiments, the present invention is not limited thereto. For example, the transparent column electrodes 15 and the transparent row electrodes 16 (the transparent row electrodes 34 and the transparent column electrodes 35 in the case of the second embodiment) may have a "wave form" or the like.

This application is based upon and claims the benefit of priority from the prior Japanese Patent Application No. 2013-036683 filed on February 27, 2013, the entire contents of which are incorporated herein by reference.

Hereinafter, Supplementary Notes describe the characteristic of the present invention.

The above-described embodiments can be partially or entirely described as in the following Supplementary Notes; however, the embodiments are not limited to these Supplementary Notes.

(Supplementary Note 1)

Supplementary Note 1 is an input device (corresponding to the touch panel 10 of the first embodiment or the touch panel 30 of the second embodiment) comprising:

first electrodes (corresponding to the transparent column electrodes 15 of the first embodiment or the transparent column electrodes 35 of the second embodiment) arranged above a transparent substrate; second electrodes (corresponding to the transparent row electrodes 16 of the first embodiment or the transparent row electrodes 34 of the second embodiment) arranged on the transparent substrate in a manner to intersect with the first electrodes; and insulators (corresponding to the transparent insulators 17 of the first embodiment or the transparent insulators 36 of the second embodiment) arranged at each intersection of the first electrodes and the second electrodes and insulate the first electrodes and the second electrodes from each other, wherein at least a portion of the first electrodes and a portion of the second electrodes are exposed to outside.

(Supplementary Note 2)

Supplementary Note 2 is the input device according to Supplementary Note 1, further comprising:

a selecting means (corresponding to the X electrode selection section 19 and the Y electrode selection section 20 of the first embodiment) for sequentially selecting the first electrodes, and sequentially selecting the second electrodes while selecting one of the first electrodes; and an applying means (corresponding to the direct current power source 22 of the first embodiment) for applying a direct current voltage to a first electrode or a second electrode currently being selected by the selecting means.

(Supplementary Note 3)

Supplementary Note 3 is the input device according to Supplementary Note 2, further comprising:

a detecting means (corresponding to the touch judging section 23 of the first embodiment) for detecting a touch on an intersection point of the first electrodes and the second electrodes by a conductive material, based on a direct current voltage appeared in an electrode to which the direct current voltage is not applied among the first electrode and the second electrode.

(Supplementary Note 4)

Supplementary Note 4 is the input device according to Supplementary Note 3, further comprising:

a controlling means (corresponding to the control section 102 of the first embodiment) for controlling the applying means to change the direct current voltage that is applied to the first electrode or the second electrode by the applying means to a direct current voltage having a higher value, when the touch by the conductive material is detected by the detecting means.

(Supplementary Note 5)

Supplementary Note 5 is a driving method that is applied in the input device according to Supplementary Note 1, including:

a selecting step of sequentially selecting the first electrodes, and sequentially selecting the second electrodes while selecting one of the first electrodes; an applying step of applying a direct current voltage to a first electrode or a second electrode currently being selected in the selecting step; a detecting step of detecting a touch on an intersection point of the first electrodes and the second electrodes by a conductive material, based on a direct current voltage appeared in an electrode to which the direct current voltage is not applied among the first electrode and the second electrode; and a controlling step of controlling the applying step to change the direct current voltage that is applied to the first electrode or the second electrode in the applying step to a direct current voltage having a higher value, when the touch by the conductive material is detected in the detecting step.

(Supplementary Note 6)

Supplementary Note 6 is an electronic apparatus comprising the input device according to any one of Supplementary Notes 1 to 4.

DESCRIPTION OF REFERENCE NUMERALS

| 10 | touch panel |
| 12 | transparent substrate |
| 15 | transparent column electrode |
| 16 | transparent row electrode |
| 17 | transparent insulator |
| 19 | x electrode selection section |
| 20 | y electrode selection section |
| 22 | direct current power source |
| 23 | touch judging section |
| 30 | touch panel |
| 32 | transparent substrate |
| 34 | transparent row electrode |
| 35 | transparent column electrode |
| 36 | transparent insulator |

| 102 | control section |

**Claims**

1.   An input device comprising:

first electrodes arranged above a transparent substrate; second electrodes arranged on the transparent substrate in a manner to intersect with the first electrodes; and insulators arranged at each intersection of the first electrodes and the second electrodes and insulate the first electrodes and the second electrodes from each other, wherein at least a portion of the first electrodes and a portion of the second electrodes are exposed to outside.

2.   The input device according to claim 1, further comprising:

a selecting means for sequentially selecting the first electrodes, and sequentially selecting the second electrodes while selecting one of the first electrodes; and an applying means for applying a direct current voltage to a first electrode or a second electrode currently being selected by the selecting means.

3.   The input device according to claim 2, further comprising:

a detecting means for detecting a touch on an intersection point of the first electrodes and the second electrodes by a conductive material, based on a direct current voltage appeared in an electrode to which the direct current voltage is not applied among the first electrode and the second electrode.

4.   The input device according to claim 3, further comprising:

a controlling means for controlling the applying means to change the direct current voltage that is applied to the first electrode or the second electrode by the applying means to a direct current voltage having a higher value, when the touch by the conductive material is detected by the detecting means.

5.   A driving method that is applied in the input device according to claim 1, comprising:

a selecting step of sequentially selecting the first electrodes, and sequentially selecting the second electrodes while selecting one of the first electrodes;

an applying step of applying a direct current voltage to a first electrode or a second electrode currently being selected in the selecting step;

a detecting step of detecting a touch on an intersection point of the first electrodes and the second electrodes by a conductive material, based on a direct current voltage appeared in an electrode to which the direct current voltage is not applied among the first electrode and the second electrode; and

a controlling step of controlling the applying step to change the direct current voltage that is applied to the first electrode or the second electrode in the applying step to a direct current voltage having a higher value, when the touch by the conductive material is detected in the detecting step.

6. An electronic apparatus comprising the input device according to any one of claims 1 to 4.

# FIG. 1

(a)

(b)

FIG. 2

# FIG. 3

(a)

(b)

# FIG. 4

# FIG. 5

# FIG. 6

START

S1 — SET VOLTAGE VALUE OF DIRECT CURRENT POWER SOURCE TO FIRST DIRECT CURRENT VOLTAGE

S2 — HAS TOUCH BEEN DETECTED?  NO

YES

S3 — IS THERE OBJECT AT TOUCHED POINT?  NO

YES

S4 — SET VOLTAGE VALUE OF DIRECT CURRENT POWER SOURCE TO SECOND DIRECT CURRENT VOLTAGE THAT IS HIGHER THAN FIRST DIRECT CURRENT VOLTAGE

S5 — PERFORM PROCESSING ASSIGNED TO OBJECT

S6 — HAS PREDETERMINED AMOUNT OF TIME ELAPSED?  NO

YES

# FIG. 7

(a)

(b)

# FIG. 8

(a)

(b)

FIG. 9

**INTERNATIONAL SEARCH REPORT**

| International application No. |
|---|
| PCT/JP2014/000413 |

A. CLASSIFICATION OF SUBJECT MATTER
*G06F3/041*(2006.01)i, *G06F3/045*(2006.01)i

According to International Patent Classification (IPC) or to both national classification and IPC

B. FIELDS SEARCHED

Minimum documentation searched (classification system followed by classification symbols)
G06F3/041, G06F3/045

Documentation searched other than minimum documentation to the extent that such documents are included in the fields searched
| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2004-319255 A (Equos Research Co., Ltd.), 11 November 2004 (11.11.2004), paragraphs [0011] to [0014], [0022], [0031] to [0032], [0074], [0077], [0079]; fig. 1 to 3 (Family: none) | 1-6 |
| Y | JP 64-37614 A (Gunze Ltd.), 08 February 1989 (08.02.1989), page 2, upper right to page 3, upper right (Family: none) | 1-6 |
| Y | JP 5-53715 A (Omron Corp.), 05 March 1993 (05.03.1993), paragraphs [0009], [0012], [0015]; fig. 1 (Family: none) | 1-6 |

☐ Further documents are listed in the continuation of Box C.    ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 18 February, 2014 (18.02.14) | 25 February, 2014 (25.02.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3161738 U

- JP 2013036683 A